# EUROPEAN PATENT SPECIFICATION

(11) **EP 2 696 030 B1**
(45) Date of publication and mention of the grant of the patent: **31.07.2019**
(21) Application number: 12768226.8
(22) Date of filing: 06.04.2012
(51) Int. Cl.: F01D 9/06

(54) **TURBINE VANE**
TURBINENSCHAUFEL
AUBE DIRECTRICE

(30) Priority: 07.04.2011 JP 2011085580
(43) Date of publication of application: 12.02.2014
(73) Proprietor: IHI Corporation, Tokyo 135-8710 (JP); The Society of Japanese Aerospace Companies, Inc., Minato-ku 107-0052 (JP)
(72) Inventor: OKITA, Yoji, Tokyo 135-8710 (JP)
(74) Representative: Carpmael, Robert Maurice Charles
(86) International application number: PCT/JP2012/059459
(87) International publication number: WO 2012/137898

(56) References cited:
- EP-A2- 1 645 721
- JP-A- 2006 207 586
- JP-A- 2006 242 187

## Description

### [Technical Field]

The present invention relates to a turbine vane used in a turbine for gas turbine engines such as an aircraft engine and an industrial gas turbine engine.

### [Background Art]

In general, turbine vanes to be exposed to a combustion gas while a gas turbine engine is in operation can be cooled by use of cooling air (part of compressed air) extracted from a compressor or a fan of the gas turbine engine.

To put it specifically, a cooling passage into which the cooling air can flow is formed inside the turbine vane, and multiple film cooling holes through which the cooling air can jet out are formed in a vane surface of the turbine vane in such a way as to communicate with the cooling passage. For this reason, while the gas turbine engine is in operation, the cooling air flowing into the cooling passage is jetted out through the multiple film cooling holes, thus forming a film cooling layer which covers the vane surface of the turbine vane, and can perform film cooling on the turbine vane.

Conventional techniques related to the present invention have been disclosed in PTL 1 and PTL 2.

### [Citation List]

### [Patent Literature]

[PTL 1] JP 2009-162224 A
[PTL 2] JP 07-063002 A

JP 2006 242187A discloses cooling holes on an external surface of an aerofoil and in communication with a cooling circuit, the holes having flare-shaped outlets.

### [Summary of Invention]

### [Technical Problem]

In recent years, there has been increasing demand for higher output from gas turbine engines. To meet the demand, the temperature of a combustion gas tends to become very high at an entrance-side portion of a turbine. Against this background, it is imperative to increase the cooling performance of the turbine vane to a higher level by increasing film efficiency on the vane surface of the turbine vane, particularly around a front edge-side vane surface of the turbine vane (including the front edge-side vane surface) where the temperature of the component is apt to rise due to collisions of the combustion gas.

With this taken into consideration, an object of the present invention is to provide a turbine vane having a novel configuration which is capable of fully cooling a front edge-side vane surface and its vicinity.

### [Solution to Problem]

The present invention is in a turbine vane as defined in Claim 1.

In the description and scope of claims of this application, the "turbine vane" represents a turbine rotor vane and a turbine stator vane, and the "hole cross section" means a cross section perpendicular to the hole-center line. Furthermore, the "exit side" represents the exit side viewed in the flowing direction of the cooling air, and the "obtuse angle side" represents a side (region) having an obtuse angle defined with the vane surface.

### [Advantageous Effects of Invention]

The present invention makes it possible to fully diffuse the cooling air, which is jetted out through each film cooling hole, on the front edge-side vane surface of the turbine vane in the span direction while inhibiting the cooling air from coming up away from the front edge-side vane surface of the turbine vane. For this reason, it is possible to increase the film efficiency around the front edge-side vane surface of the turbine vane, and accordingly to increase the cooling performance of the turbine vane to a higher level.

### [Brief Description of Drawings]

Fig. 1 is a perspective view of a turbine stator vane of an embodiment of the present invention.
Fig. 2 is a side view of the turbine stator vane of the embodiment of the present invention, which is partially cut away.
Fig. 3 is a magnified cross-sectional view of the turbine stator vane taken along a III-III line in Fig. 2.
Fig. 4(a) is a cross-sectional view of a part of a front edge-side vane surface of the turbine stator vane of the embodiment of the present invention, which extends in a span direction; Fig. 4 (b) is a magnified cross-sectional view taken along a IVB-IVB line in Fig. 4 (a) ; Fig. 4 (c) is a magnified view of a portion viewed in a direction indicated with an arrow IVC in Fig. 4(a); and Fig. 4(d) is a magnified view of a portion viewed in a direction indicated with an arrow IVD in Fig. 4 (a) .
Fig. 5(a) is a cross-sectional view of a front edge-side portion of a turbine vane of Invention Example, and Fig. 5(b) is a cross-sectional view taken along a VB-VB line in Fig. 5(a).
Fig. 6(a) is a cross-sectional view of a front edge-side portion of a turbine vane of Comparative Example 1, and Fig. 6(b) is a cross-sectional view taken along a XIB-VIB line in Fig. 6(a).
Fig. 7(a) is a cross-sectional view of a front edge-side portion of a turbine vane of Comparative Example 2, and Fig. 7 (b) is a cross-sectional view taken along a XIIB-VIIB line in Fig. 7(a).
Fig. 8 is a schematic diagram for explaining a stagnation point and the like on the front edge-side vane surface of the turbine vane.
Figs. 9(a), 9(b) and 9(c) are diagrams showing how the temperature is distributed around the front edge-side vane surface of the turbine vane of Invention Example.
Figs. 10 (a), 10(b) and 10(c) are diagrams showing how the temperature is distributed around the front edge-side vane surface of the turbine vane of Comparative Example 1.
Figs. 11(a), 11(b) and 11(c) are diagrams showing how the temperature is distributed around the front edge-side vane surface of the turbine vane of Comparative Example 2.
Fig. 12 is a diagram showing relationships between the distance from the stagnation point on the front edge-side vane surface and film efficiency regarding the turbine vane of Invention Example, the turbine vane of Comparative Example 1 and the turbine vane of Comparative Example 2.

### [Description of Embodiments]

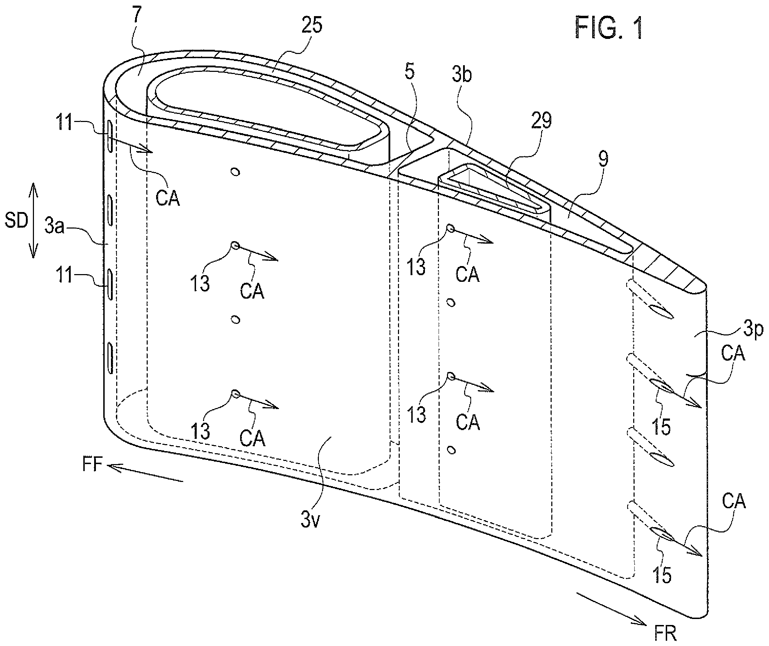

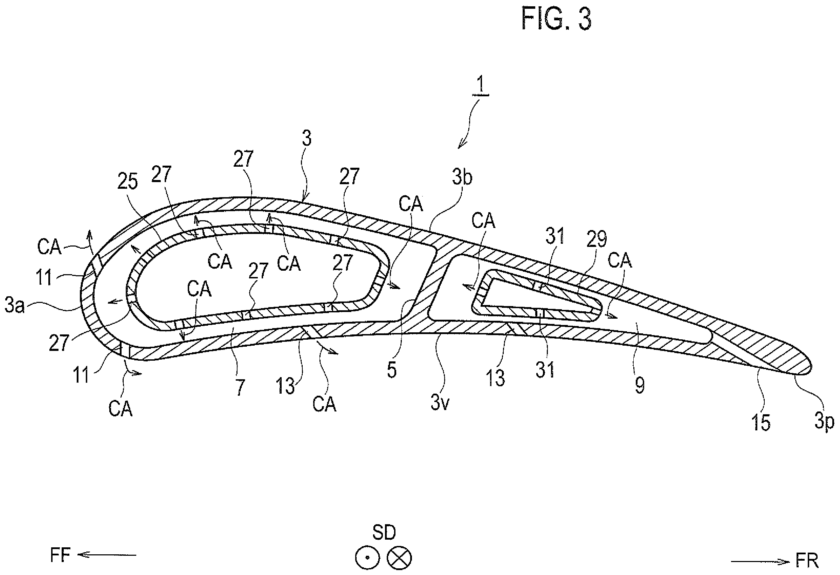

Descriptions will be provided for an embodiment of the present invention by referring to Fig. 1 to Fig. 4. It should be noted that in the drawings, reference sign "FF" denotes a frontward direction and reference sign "FR" denotes a rearward direction. The frontward direction means an upstream direction in the light of a flowing direction of a main stream, and the rearward direction means a downstream direction in the light of the flowing direction of the main stream.

As shown in Figs. 1, 2 and 3, a turbine stator vane 1 of the embodiment is used for a turbine (not shown) of a gas turbine engine such as an aircraft engine and an industrial gas turbine engine. The turbine stator vane 1 can be cooled by cooling air (part of compressed air) CA extracted from a compressor (not shown) or a fan (not shown) of the gas turbine engine. The specific configuration of the turbine stator vane 1 is as follows.

The turbine stator vane 1 is produced (cast) by lost wax precision casting, for example. As shown in Fig. 1, the turbine stator vane 1 includes a hollow stator vane body (vane body) 3. A rib wall (partition wall) 5 is provided inside the stator vane body 3. The rib wall 5 divides the inside of the stator vane body 3 into front and rear halves, and forms a front cooling passage 7 and a rear cooling passage 9 into which the cooling air CA can flow. In other words, the front cooling passage 7 is formed in the front half of the stator vane body 3, and the rear cooling passage 9 is formed in the rear half of the stator vane body 3.

As shown in Fig. 1, the stator vane body 3 has a vane surface 3a in its front edge-side portion. Multiple film cooling holes 11 are formed in the vane surface 3a so as to communicate with the front cooling passage 7. The cooling air CA which flows into the front cooling passage 7 is jetted out through the film cooling holes 11.

The stator vane body 3 has a vane surface 3v in its flank portion. Multiple film cooling holes 13 are formed in the vane surface 3v so as to communicate with the front cooling passage 7 or the rear cooling passage 9. The cooling air CA which flows into the front cooling passage 7 or the rear cooling passage 9 is jetted out through the film cooling holes 13.

The stator vane body 3 further has a vane surface 3p in its rear edge-side portion. Multiple film cooling holes 15 are formed in the vane surface 3p so as to communicate with the rear cooling passage 9. The cooling air CA which flows into the rear cooling passage 9 is jetted out through the film cooling holes 15.

The stator vane body 3 has a vane surface 3b in its back portion. Multiple film cooling holes (not shown) similar to the film cooling holes 11, the film cooling holes 13 and the film cooling holes 15 may be formed in the vane surface 3b. In this case, too, the film cooling holes are formed communicating with the front cooling passage 7 or the rear cooling passage 9 in the same way that has been described. The cooling air which flows into the front cooling passage 7 or the rear cooling passage 9 is jetted out through the film cooling holes (not shown).

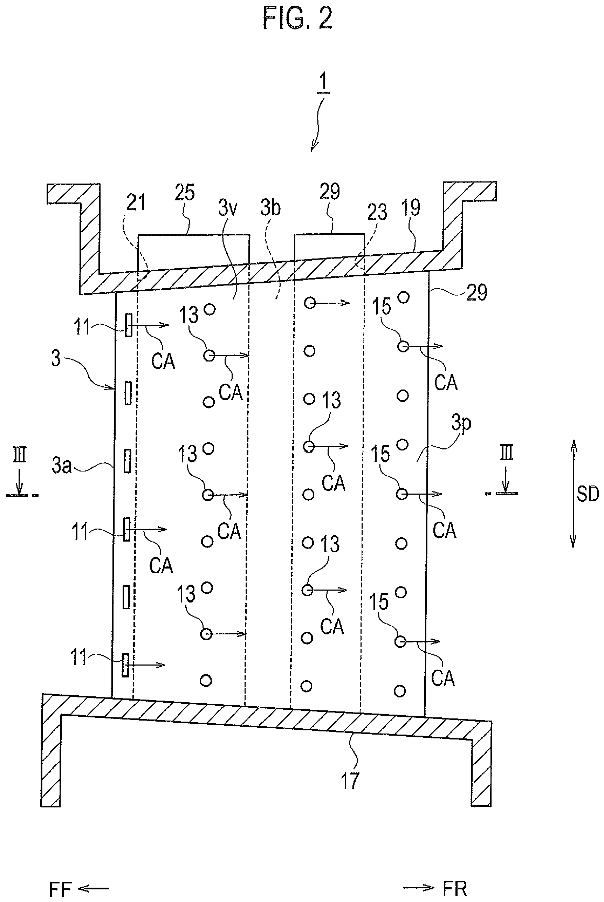

As shown in Fig. 2, an arc-shaped inner band 17 is integrally formed on a base-side portion of the stator vane body 3 in a span direction SD. In addition, an arc-shaped outer band 19 is integrally formed on a tip-side portion of the stator vane body 3 in the span direction SD. A front insertion hole 21 is formed in the outer band 19 so as to be aligned with the front cooling passage 7 of the stator vane body 3. Meanwhile, a rear insertion hole 23 is formed in the outer band 19 so as to be aligned with the rear cooling passage 9 of the stator vane body 3. In other words, the front insertion hole 21 is formed in the front half of the outer band 19, and the rear insertion hole 23 is formed in the rear half of the outer band 19. Moreover, the front insertion hole 21 communicates with the front cooling passage 7 of the stator vane body 3, and the rear insertion hole 23 communicates with the rear cooling passage 9 of the stator vane body 3.

A pipe-shaped front insert 25 is arranged in the front cooling passage 7 of the stator vane body 3. The upper portion of the front insert 25 is inserted into the front insertion hole 21 of the outer band 19. Multiple front impingement cooling holes 27 are formed in the outer peripheral surface of the front insert 25. The cooling air CA is jetted out to the inner wall surface of the front cooling passage 7 through the front impingement cooling holes 27.

A pipe-shaped rear insert 29 is arranged in the rear cooling passage 9 of the stator vane body 3. The upper portion of the rear insert 29 is inserted into the rear insertion hole 23 of the outer band 19. Multiple rear impingement cooling holes 31 are formed in the outer peripheral surface of the rear insert 29. The cooling air CA is jetted out to the inner wall surface of the rear cooling passage 9 of the stator vane body 3 through the rear impingement cooling holes 31.

Descriptions will be subsequently provided for a main part of the embodiment of the present invention.

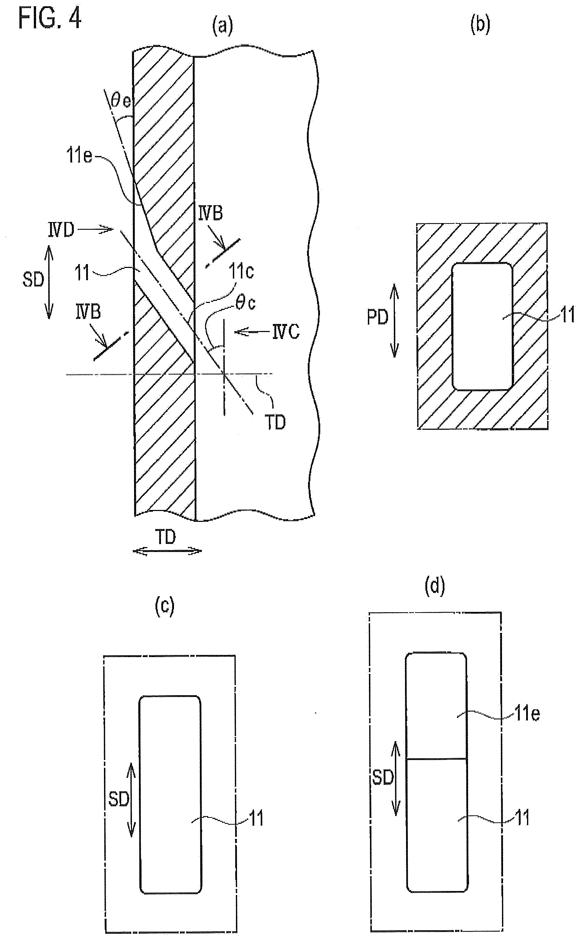

As shown in Figs. 4(a), 4(c) and 4(d), an entrance-side opening and an exit-side opening of each film cooling hole 11 have a rectangular long-hole shape extending in the span direction SD, and having rounded corners. In addition, as shown in Fig. 4(a) and 4(b), the hole cross section of each of the film cooling holes 11 has a rectangular long-hole shape extending in a direction PD parallel to the cross section along the span direction SD, and having rounded corners. It should be noted that the cross section shown in Fig. 4(b) is perpendicular to a hole-center line 11c of the film cooling hole 11. In addition, the aspect ratio of the hole cross section of each film cooling hole 11 (or the ratio of the long side to the short side of the long hole viewed on the assumption that there are no rounded corners) is set in a range of 1.1 to 3.0, and preferably in a range of 1.5 to 2.5. The reason for this is that: if the aspect ratio is less than 1.1, it is difficult to fully diffuse the cooling air CA, which is jetted out through each film cooling hole 11, on the vane surface 3a in the span direction SD; and if the aspect ratio is greater than 3.0, it is difficult to process each film cooling hole 11 (for example, by electrical discharge machining).

As shown in Fig. 4(a), the hole-center line 11c of each film cooling hole 11 tilts from a thickness direction TD of the stator vane body 3 on the cross section along the span direction SD (the cross section parallel to the span direction SD). In addition, a tilt angle θc of each hole-center line 11c from the span direction SD is set in a range of 20° to 60° or
preferably in a range of 30° to 50°. The reason for this is that: if the tilt angle θc is less than 20°, it is difficult to process the film cooling hole 11, and stress concentration increases around the film cooling hole 11; and if the tilt angle θc is greater than 60°, the cooling air CA clearly comes up away (separates) from the stator vane body 3, and the cooling performance accordingly deteriorates.

An exit-side and obtuse angle-side portion (predetermined exit-side portion) 11e on the hole wall surface of each film cooling hole 11 tilts further to the span direction SD (or the vane surface 3c) than the hole-center line 11c of the film cooling hole 11 on the cross section along the span direction SD. In addition, a tilt angle θe of the predetermined exit-side portion 11e of the hole wall surface of each film cooling hole 11 to the span direction SD (or the vane surface 3a) is in a range of 5° to 20° or preferably in a range of 5° to 10°. The reason for this is that: if the tilt angle θe is less than 5°, it is not possible to fully diffuse the cooling air CA in the span direction SD; and if the tilt angle θe is greater than 20°, the stream is more likely to separate inside the hole wall surface of the film cooling hole 11, and the cooling performance accordingly deteriorates.

Descriptions will be subsequently provided for how the embodiment of the present invention works and for effects of the embodiment.

While the gas turbine engine is in operation, the cooling air CA flowing into the front insert 25 is jetted out to the inner wall surface of the front cooling passage 7 of the stator vane body 3 through the multiple front impingement cooling holes 27, and the cooling air CA flowing into the rear insert 29 is jetted out to the inner wall surface of the rear cooling passage 9 of the stator vane body 3 through the multiple rear impingement cooling holes 31. Thereby, the impingement cooling (inner cooling) can be performed on the turbine stator vane 1 (the stator vane body 3).

Furthermore, the cooling air CA contributing to the impingement cooling of the turbine stator vane 1, in other words, the cooling air CA flowing into the front cooling passage 7 and the rear cooling passage 9 of the stator vane body 3 is jetted out through the multiple film cooling holes 11, the multiple film cooling holes 13 and the multiple film cooling holes 15. Thereby, the cooling air CA forms a film cooling layer (not shown) covering the front edge-side vane surface 3a, the flank-side vane surface 3v, and the like of the stator vane body 3 of the turbine stator vane 1, and can perform the film cooling on the turbine stator vane 1.

In this respect, descriptions will be provided for a result of an analysis using a three-dimensional steady-state viscosity CFD (Computational Fluid Dynamics) on how the turbine vane is cooled by the film cooling holes of the embodiment.

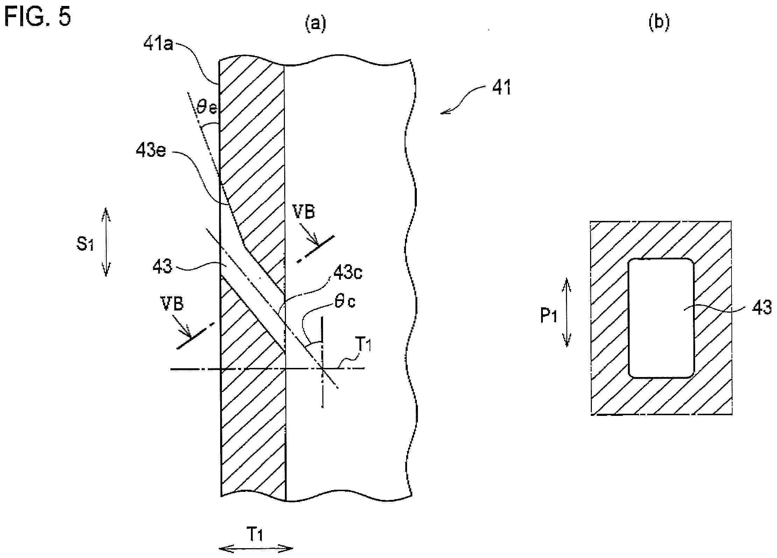

Fig. 5(a) is a cross-sectional view of a front edge-side vane surface 41a of a turbine vane 41 of the embodiment of the present invention which was simulated in the above-mentioned analysis, the cross-sectional view taken along a span direction S₁. Meanwhile, Fig. 5(b) is a cross-sectional view taken along a VB-VB line in Fig. 5(a). This cross section is perpendicular to a hole-center line 43c of a film cooling hole 43.

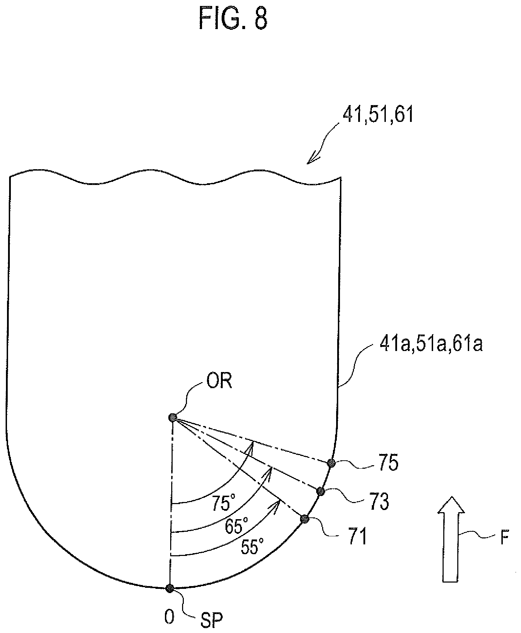

As shown in Fig. 5(a), the film cooling hole 43 is formed in the front edge-side vane surface 41a of the turbine vane 41 (see Fig. 8). In addition, the hole-center line 43c of the film cooling hole 43 tilts from a thickness direction T₁ of the turbine vane 41 at the above-mentioned tilt angle θc on the cross section along the span direction S₁. Moreover, on this cross section, an exit-side and obtuse angle-side portion (predetermined exit-side portion) of the hole wall surface of the film cooling hole 43 tilts to the span direction S₁ at the above-mentioned tilt angle θe, and tilts further to the span direction S₁ than the hole center line 43c. As shown in Fig. 5(b), the film cooling hole 43 has a substantially rectangular cross section extending in a direction P₁ in parallel to the cross section along the span direction S₁. In other words, the film cooling hole 43 is a substantially rectangular long hole extending in the direction P₁.

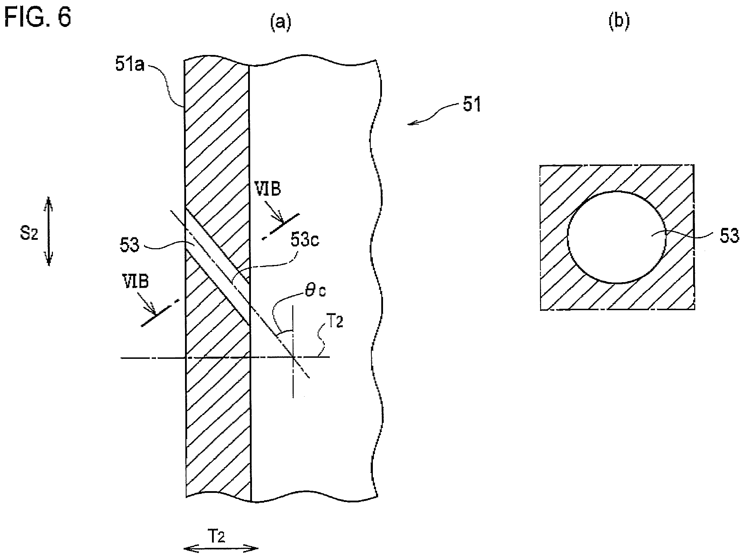

Fig. 6(a) is a cross-sectional view of a front edge-side vane surface 51a of a turbine vane 51 (see Fig. 8) as Comparative Example 1 which was simulated in the above-mentioned analysis, the cross-sectional view taken along a span direction S₂. Meanwhile, Fig. 6(b) is a cross-sectional view of the front edge-side vane surface 51a taken along a VIB-VIB line in Fig. 6(a). It should be noted that this cross section is perpendicular to a hole-center line 53c of a film cooling hole 53.

As shown in Fig. 6(a), the film cooling hole 53 is formed in the front edge-side vane surface 51a of the turbine vane 51. In addition, the hole-center line 53c of the film cooling hole 53 tilts from a span direction S₂ of the turbine vane 51 at the predetermined angle θc on the cross section along the span direction S₂. As shown in Fig. 6(b), the film cooling hole 53 has a circular cross section on a plane perpendicular to the hole-center line 53c. It should be noted that the area of this circle is equal to the cross-sectional area of the film cooling hole 43 shown in Fig. 5(b).

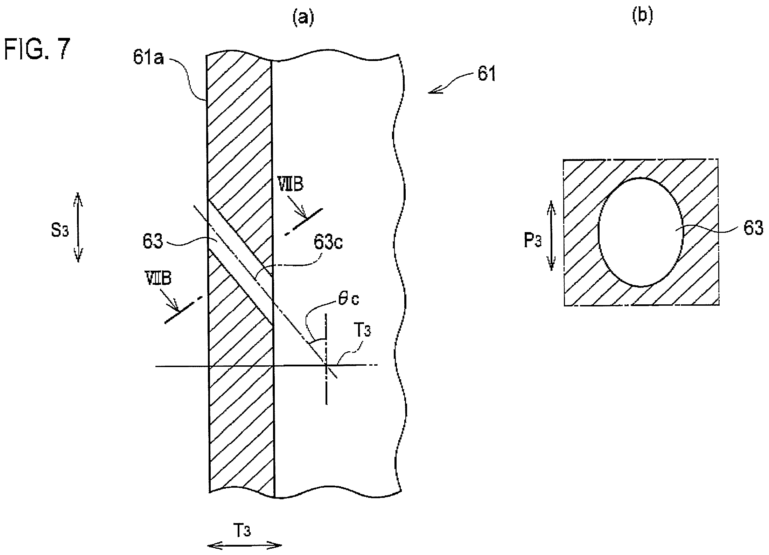

Fig. 7 (a) is a cross-sectional view of a front edge-side vane surface 61a of a turbine vane 61 (see Fig. 8) as Comparative Example 2 which was simulated in the above-mentioned analysis, the cross-sectional view taken along a span direction S₃. Meanwhile, Fig. 7(b) is a cross-sectional view of the front edge-side vane surface 61a taken along a VIIB-VIIB line in Fig. 7(a). It should be noted that this cross section is perpendicular to a hole-center line 63c of a film cooling hole 63.

As shown in Fig. 7(a), the film cooling hole 63 is formed in the front edge-side vane surface 61a of the turbine vane 61. In addition, the hole-center line 63c of the film cooling hole 63 tilts from a span direction S₃ of the turbine vane 61 at the predetermined angle θc on the cross section along the span direction S₃. As shown in Fig. 7(b), the film cooling hole 63 has an elliptical cross section having a major axis along a direction P₃ on a plane perpendicular to the hole-center line 63c. In this respect, the direction P₃ is in parallel to a cross section taken along the span direction S₃. It should be noted that the area of this ellipse is equal to the cross-sectional area of the film cooling hole 43 shown in Fig. 5(b).

Next, descriptions will be provided for conditions for the analysis. As shown in Fig. 8, this analysis was carried out on the assumption that a position of a stagnation point SP was 0° when viewed from the center OR of the curvature of the vane surface 41a of the turbine vane 41, and the exit-side opening portion of the film cooling hole 43 was formed in a position 71 which was displaced downstream of the stagnation point SP at 55° in the direction of a main flow F of a combustion gas. Furthermore, in this analysis, the front edge-side vane surfaces 41a, 51a, 61a of the respective turbine vanes 41, 51, 61 were formed into the same shape. For this reason, it was assumed that, like in the case of the film cooling hole 43, the exit-side opening portion of the film cooling hole 53 of the turbine vane 51 and the exit-side opening portion of the film cooling hole 63 of the turbine vane 61 were each formed in the position 71 which was displaced downstream of the stagnation point SP at 55°.

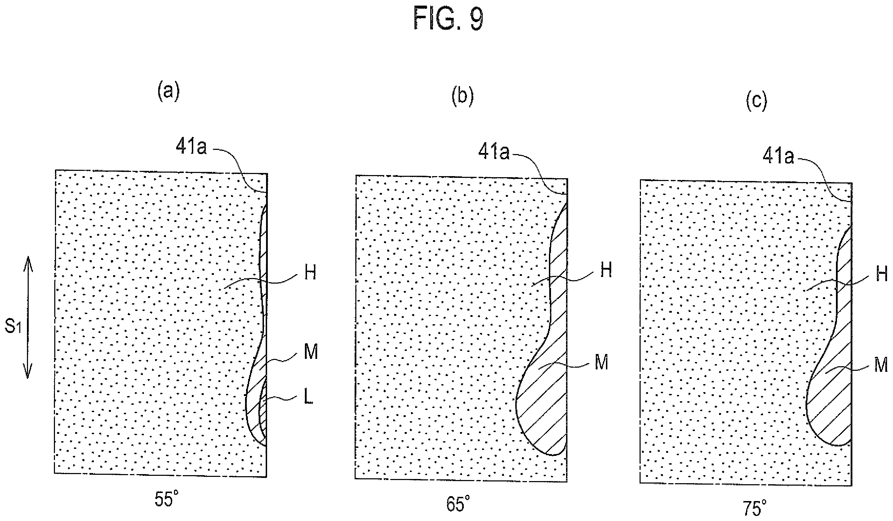

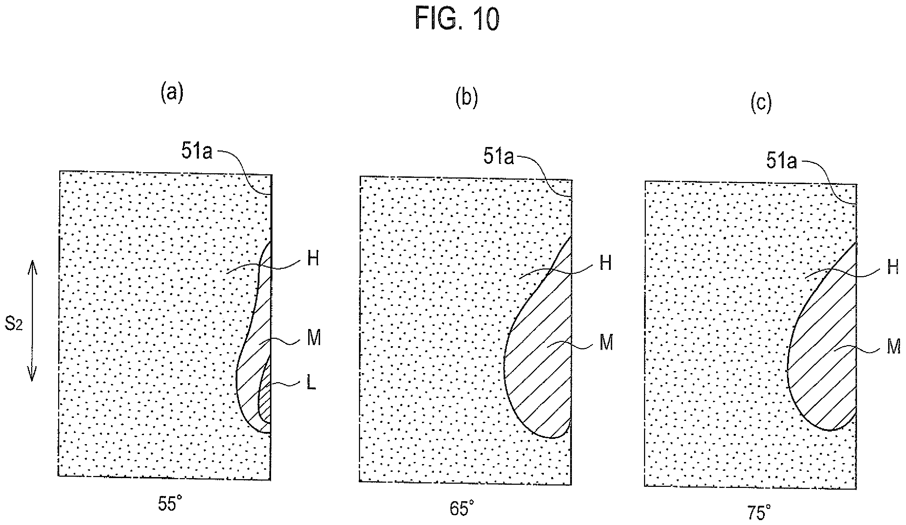

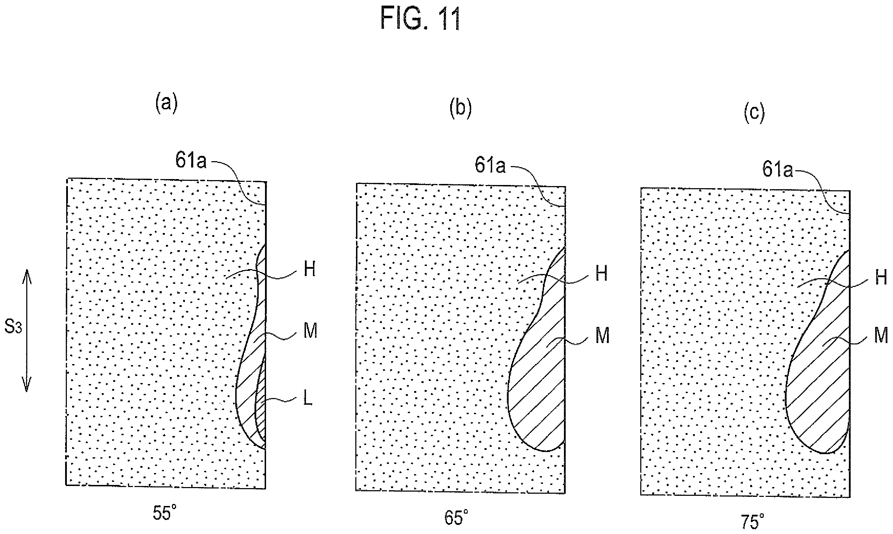

Figs. 9(a) to 9(c), Figs. 10(a) to 10(c) and Figs. 11(a) to 11(c) show results of the analysis using the three-dimensional steady-state viscosity CFD. Figs. 9(a) to 9(c) show temperature distributions around the front edge-side vane surface of the turbine vane 41 of the embodiment. Figs. 10(a) to 10(c) show temperature distributions around the front edge-side vane surface of the turbine vane 51 as Comparative Example 1. Figs. 11(a) to 11(c) show temperature distributions around the front edge-side vane surface of the turbine vane 61 as Comparative Example 2. Furthermore, Fig. 9(a), Fig. 10(a) and Fig. 11(a) show the temperature distributions at the position 71 (see Fig. 8) which was displaced downstream of the stagnation point SP at 55° in the direction of the main flow F. Similarly, Fig. 9(b), Fig. 10(b) and Fig. 11(b) show the temperature distributions at a position 73 (see Fig. 8) which was displaced downstream of the stagnation point SP at 65°. Moreover, Fig. 9(c), Fig. 10(c) and Fig. 11(c) show the temperature distributions at a position 75 (see Fig. 8) which was displaced downstream of the stagnation point SP at 75°. In this analysis, it was assumed that the Reynolds number and the blow ratio were approximately 9×10⁴ and 2.0, respectively, around the front edge-side vane surface.

In Fig. 9(a) to Fig. 11(c), an area H represents a high-temperature area corresponding to the combustion gas. On the other hand, an area M represents an area where the mixture of the combustion gas and the cooling gas jetted out through the film cooling hole 43 (53, 63) does not progress so much. In other words, the heat exchange does not progress fully between the combustion gas and the cooling gas in the area M. For this reason, the temperature of the area M is lower than that of the area H. In addition, an area L represents an area where the mixture of the cooling gas and the combustion gas progresses even less than the area M. For this reason, the temperature of the area L is lower than that of the area M.

It is learned that the area M and the area L shown in Fig. 9(a) are distributed longer along the span direction S₁ than the area M and the area L shown in each of Fig. 10(a) and Fig. 11(a). This means that: in Fig. 9(a), the cooling air is inhibited from coming up away from the vane surface 41a (in other words, separating from the front edge-side vane surface); and accordingly, the cooling air is fully diffused on the vane surface 41a in the span direction S₁. It is learned that the same results are obtained by the comparison of Fig. 9(b) with Fig. 10 (b) and Fig. 11(b) as well as the comparison of Fig. 9 (c) with Fig. 10(c) and Fig. 11(c). In short, these results show that the film cooling holes 43 inhibit the separation of the cooling air, and obtain the full diffusion of the cooling air on the vane surface 41a.

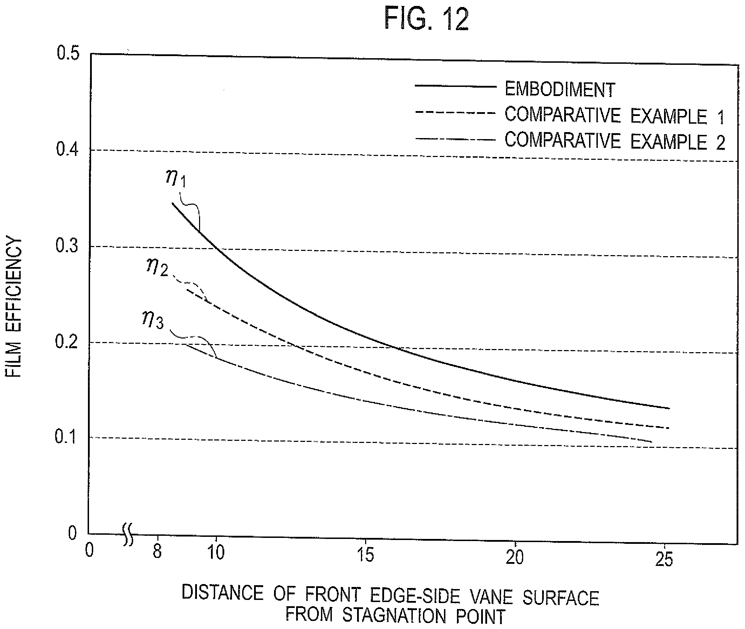

Moreover, Fig. 12 shows a result of an analysis on average film efficiencies of the cooling gas around the front edge-side vane surface along the span direction which was obtained from another three-dimensional steady-state viscosity CFD analysis. It should be noted that the film efficiency is defined as (Tg-Tf)/(Tg-Tc), where: Tg denotes the temperature of the combustion gas; Tf denotes the temperature of the film cooling layer; and Tc denotes the temperature of the cooling air CA. In addition, the conditions for this analysis are the same as those for the foregoing analysis. That is to say, it was assumed that the Reynolds number and the blow ratio were approximately 9×10⁴ and 2.0, respectively, around the front edge-side vane surface.

In Fig. 12, a solid line indicates a change in average film efficiency η₁ of the turbine vane 41 (see Fig. 5(a) and Fig. 5(b)) of the embodiment which was used in the analysis. In addition, a dotted line indicates a change in average film efficiency η₂ of the turbine vane 51 (see Fig. 6(a) and Fig. 6(b)) of Comparative Example 1. Furthermore, a chain dashed line indicates a change in average film efficiency η₃ of the turbine vane 61 (see Fig. 7(a) and Fig. 7(b)) of Comparative Example 2. The horizontal axis of the graph shown in Fig. 12 represents the distance of the front edge-side vane surface from the stagnation point SP. However, the distance is converted into a dimensionless distance by dividing the distance by the equivalent diameter of the hole cross section of the film cooling hole (the diameter of a circular hole having the same cross-sectional area) . It can be learned from this graph that: the average film efficiency η₁ of the turbine vane 41 of the embodiment is sufficiently higher than the average film efficiencies η₂, η₃ of the turbine vanes 51, 61 of Comparative Examples 1 and 2; and this tendency can be obtained regardless of how long the distance is.

In the embodiment, as described above, the hole cross section of each film cooling hole 11 is shaped like a long hole extending in the direction PD parallel to the cross section along the span direction SD. In addition, the hole-center line 11c of each film cooling hole 11 tilts from the thickness direction TD on the cross section along the span direction SD. Moreover, the predetermined exit-side portion 11e of the hole wall surface of each film cooling hole 11 tilts further from the thickness direction TD than the hole-center line 11c on the cross section along the span direction SD. For this reason, each film cooling hole 11 is capable of more fully diffusing the cooling air CA, which is jetted out through the film cooling hole 11, on the vane surface 3a of the stator vane body 3 in the span direction SD while inhibiting the cooling air CA from coming up (separating) away from the vane surface 3a than the case where the cross-sectional of the film cooling hole 11 would be shaped like a circle or an ellipse.

In addition, the embodiment makes it possible to increase the film efficiency around the vane surface 3a of the stator vane body 3 of the turbine stator vane 1, and accordingly to increase the cooling performance of the turbine stator vane 1 to a higher level.

It should be noted that the present invention is not limited to what has been described for the embodiment. The present invention can be carried out in other various modes including, for example, a mode where the technical idea applied to the turbine stator vane 1 is applied to a turbine rotor vane. What is more, the scope of the right included in the present invention is not limited to these embodiments.

### [Industrial Applicability]

The invention makes it possible to fully diffuse the cooling air, which is jetted out through the film cooling holes, on the front edge-side vane surface of the turbine vane in the span direction of the turbine vane while inhibiting the cooling air from coming up away from the vane surface. Thus, it is possible to increase the film efficiency around the front edge-side vane surface of the turbine vane and to increase the cooling performance of the turbine stator vane to a higher level.

## Claims

1. A turbine vane (1) for a turbine of a gas turbine engine, and capable of being cooled by cooling air (CA), the turbine vane (1) comprising:
a vane body (3) including:
a vane surface (3a);
a cooling passage (7) allowing the cooling air (CA) to flow into the vane body (3), and
a plurality of film cooling holes (11) formed in the vane surface (3a) on a front edge side of the vane body (3) so as to communicate with the cooling passage (7) to jet out the cooling air (CA) through the plurality of film cooling holes (11), a hole cross section perpendicular to a center line of each film cooling hole (11) having a rectangular shape having a long side extending in a direction parallel to a cross section along a span direction (SD) of the vane body (3), a hole-center line (11c) of each film cooling hole (11) tilting from a thickness direction (TD) of the vane body (3) on a cross section of the vane surface (3a) along the span direction (SD), and an exit-side and obtuse angle-side portion (11 e) of a hole wall surface of each film cooling hole (11) tilting further from the thickness direction (TD) than the hole-center line (11c) on the cross section along the span direction (SD).

2. The turbine vane according to claim 1, wherein
an aspect ratio of the hole cross section of each film cooling hole is set in a range of 1. 1 to 3.0 wherein the aspect ratio is the ratio of the long side of the hole cross section to the short side of the hole cross section.

3. The turbine vane according to claim 1 or claim 2, wherein
a tilt angle of the hole-center line of each film cooling hole to the span direction is set in a range of 20° to 60°.

4. The turbine vane according to any one of claims 1 to 3, wherein
a plurality of other film cooling holes through which to jet out the cooling air are formed in a vane surface other than the vane surface on the front-edge side so as to communicate with the cooling passage.

## Patentansprüche

1. Turbinenschaufel (1) für eine Turbine eines Gasturbinentriebwerks und die durch Kühlluft (CA) gekühlt werden kann, wobei die Turbinenschaufel (1) umfasst:
einen Schaufelkörper (3), der Folgendes einschließt:
eine Flügeloberfläche (3a);
einen Kühlkanal (7), durch den die Kühlluft (CA) in den Schaufelkörper (3) strömen kann, und
eine Vielzahl von Filmkühlungslöchem (11), die in der Schaufeloberfläche (3a) an einer Vorderkantenseite des Schaufelkörpers (3) ausgebildet sind, um mit dem Kühlkanal (7) in Verbindung zu stehen, um die Kühlluft (CA) durch die Vielzahl von Filmkühlungslöchern (11) auszustoßen, wobei ein Lochquerschnitt senkrecht zu einer Mittellinie jedes Filmkühlungslochs (11) eine rechteckige Form mit einer langen Seite, die sich in einer Richtung parallel zu einem Querschnitt entlang einer Spannrichtung (SD) des Schaufelkörpers (3) erstreckt, aufweist, wobei sich eine Lochmittenlinie (11c) jedes Filmkühlungslochs (11) aus einer Dickenrichtung (TD) des Schaufelkörpers (3) an einem Querschnitt der Schaufeloberfläche (3a) entlang der Spannrichtung (SD) neigt und sich ein Abschnitt (11e) an der Ausgangsseite und der stumpfwinkeligen Seite einer Lochwandfläche jedes Filmkühlungslochs (11) weiter von der Dickenrichtung (TD) weg neigt als die Lochmittenlinie (11c) im Querschnitt entlang der Spannrichtung (SD).

2. Turbinenschaufel nach Anspruch 1, wobei
ein Seitenverhältnis des Lochquerschnitts jedes Filmkühlungslochs in einem Bereich von 1,1 bis 3,0 festgelegt ist, wobei das Seitenverhältnis das Verhältnis der langen Seite des Lochquerschnitts zu der kurzen Seite des Lochquerschnitts ist.

3. Turbinenschaufel nach Anspruch 1 oder Anspruch 2, wobei
ein Neigungswinkel der Lochmittenlinie jedes Filmkühlungslochs zur Spannrichtung in einem Bereich von 20° bis 60° festgelegt ist.

4. Turbinenschaufel nach einem der Ansprüche 1 bis 3, wobei eine Vielzahl weiterer Filmkühlungslöcher, durch die die Kühlluft ausgestoßen wird, in einer anderen Schaufelfoberfläche als der Schaufeloberfläche an der Vorderkantenseite ausgebildet ist, um mit dem Kühlkanal in Verbindung zu stehen.

## Revendications

1. Aube de turbine (1) pour turbine de moteur à turbine à gaz, pouvant être refroidie par de l'air de refroidissement (CA), l'aube de turbine (1) comprenant:
un corps d'aube (3) comprenant:
une surface d'aube (3a);
un passage de refroidissement (7) permettant à l'air de refroidissement (CA) de pénétrer dans le corps d'aube (3), et
une pluralité de trous de refroidissement de film (11) formés dans la surface d'aube (3a) sur un côté de bord avant du corps d'aube (3), afin de communiquer avec le passage de refroidissement (7), afin de projeter l'air de refroidissement (CA) à travers la pluralité de trous de refroidissement de film (11), une section transversale de trou perpendiculaire à une ligne centrale de chaque trou de refroidissement de film (11) ayant une forme rectangulaire avec un grand côté s'étendant dans une direction parallèle à une section transversale le long d'une direction d'extension (SD) du corps d'aube (3), une ligne centrale de trou (11c) de chaque trou de refroidissement de film (11) s'inclinant depuis une direction d'épaisseur (TD) du corps d'aube (3) sur une section transversale de la surface d'aube (3a) le long de la direction d'extension (SD) et une partie (11e) du côté de la sortie et du côté de l'angle obtus d'une surface de paroi de trou de chaque trou de refroidissement de film (11) s'incline plus loin de la direction d'épaisseur (TD) que la ligne centrale de trou (11c) sur la section transversale suivant la direction d'extension (SD).

2. Aube de turbine selon la revendication 1, dans laquelle un rapport d'aspect de la section transversale du trou de chaque trou de refroidissement de film est réglé dans une plage allant de 1,1 à 3,0, le rapport d'aspect étant le rapport du côté long de la section transversale du trou sur le côté court de la section transversale du trou.

3. Aube de turbine selon la revendication 1 ou la revendication 2, dans laquelle un angle d'inclinaison de la ligne centrale de trou de chaque trou de refroidissement de film par rapport à la direction d'extension est réglé dans une plage allant de 20° à 60°.

4. Aube de turbine selon l'une quelconque des revendications 1 à 3, dans laquelle
une pluralité d'autres trous de refroidissement de film sont formés à travers lesquels l'air de refroidissement est projeté dans une surface d'aube autre que la surface d'aube du côté du bord avant afin de communiquer avec le passage de refroidissement.
